# EUROPEAN PATENT SPECIFICATION

(11) **EP 1 445 128 B1**
(45) Date of publication and mention of the grant of the patent: **03.06.2009**
(21) Application number: 03002389.9
(22) Date of filing: 04.02.2003
(51) Int. Cl.: B60G 15/06, B60G 7/00, B60G 11/04

(54) **Suspension system**
Aufhängungssystem
Système de suspension

(43) Date of publication of application: 11.08.2004
(73) Proprietor: Ford Global Technologies, LLC, Dearborn, MI 48126 (US)
(72) Inventor: Mendis, Kolita, Palo Alto, CA 94306 (US); Jansson, Lars, 439 35 Onsala (SE)
(74) Representative: Vink, Charlotta

(56) References cited:
- EP-A- 0 418 717
- EP-A- 0 867 318
- DE-A- 19 956 090
- US-A- 4 738 458

## Description

### Field of the Invention

The present invention relates to a suspension system comprising at least one leaf spring adapted to be arranged at a wheel hub of a vehicle, and a vehicle body structure. The suspension system is adapted for providing an axle centering function in conjunction with the springing behaviour. The invention also relates to a vehicle having such a suspension system.

### Technical Background

A suspension system of the kind known in the prior art of vehicles, usually comprises a spring for resilient load transfer between the wheel structure and the vehicle body structure, when, for example, the vehicle is riding over a rough road. Typically, the spring is a spiral spring or a leaf spring.

The spiral spring, often in the form of a helically wound spiral surrounding a shock absorber, such as a suspension strut, can be applied at a front wheel and at a rear wheel of a vehicle. However, the space taken up by such a suspension strut is considerable, especially in the vertical direction. Hence, it is experienced that such suspension systems occupies space at the expense of many other functions needed in the same volume.

A conventional leaf spring arrangement on the other hand, in the form of a flat bar having reinforcements in the middle portion, can mainly be used at a solid axle. Such leaf spring suspension systems are normally not adapted to be positioned at a pivoting wheel. The leaf spring is conventionally not spacious in the vertical direction, but in the longitudinal direction relating to the riding direction of the vehicle. The attachment points for fastening of the leaf spring to the vehicle body structure are normally located on the outside of the outer radius of the wheel as seen from the side of the vehicle. Hence, a wheel carrying structure provided with such a conventional leaf spring arrangement is essentially non-pivotal. Thus, a leaf spring suspension system is normally positioned at the rear wheel of larger conventional vehicles. However, there are less voluminous leaf spring arrangements in which the attachment points for fastening of the leaf spring to the vehicle body are located within the above mentioned outer radius of the wheel. Such a leaf spring is disclosed in EP 0 867 318, in which a single, C-shaped leaf spring is positioned in the area of the suspension system.

Another issue related to voluminous arrangements by the wheel structure is that it is often desirable to provide an axle centering function to the wheel structure. Together with the above mentioned prior art technologies for suspension systems, these arrangements may result in complex structures and will occupy a considerable amount of space by the wheel structure.

### Summary of the Invention

The object of the present invention is to provide a suspension system which provides space in relation to conventional suspension system and which also can provide an axle centering function. These and other objectives are achieved by a suspension system according to claim 1. Preferred embodiments of the invention are disclosed in accordance with the dependent claims. A vehicle having a suspension system according to the invention is also disclosed in accordance with claim 16.

According to the invention there is provided a suspension system comprising at least one leaf spring adapted to be operatively arranged at a wheel hub of a vehicle, and a vehicle body structure, wherein said at least one leaf spring is provided with at least two supporting devices, wherein a first supporting device, operatively connected to said wheel hub, and a second supporting device, operatively connected to said vehicle body structure, and in that one of said supporting devices is positioned above said wheel hub and an other of said supporting devices is positioned below said wheel hub, in that at least a middle portion of said leaf spring, positioned between said supporting devices, is curved and adapted to flex when said leaf spring is subject to axial loading by loads transferred through said supporting devices, and in that the wheel hub is operatively connected to a wheel axle, and the leaf spring is adapted to be used as a wheel axle positioning system. In order to further increase space around the wheel structure the wheel hub is operatively connected to a wheel axle, and the suspension system is adapted to be used as a wheel axle positioning system. Consequently, it is feasible to use the suspension system as a wheel axle locator.

It is realized that the suspension system can be used at both front and rear wheels of the vehicle. The supporting devices are positioned above and below the wheel hub respectively. The positions above and below are here and in the following to be interpreted as either a position above or a position below an imaginary horizontal plane at a level of the wheel hubs of the vehicle in question.

The advantage gained from such a suspension system is that it may be packed compactly at the wheel hub. The more vertical position propagation of inventive suspension system compared to a conventional leaf spring system allows the leaf spring to vertically deflect by flexing away from, and in towards, the wheel hub as seen from the side of the vehicle. The curvature contributes to increase the vertical resilience and hence improve the riding performance of the vehicle.

According to an embodiment of the invention said at least one leaf spring is essentially annular. The leaf spring hence surrounds the wheel hub and acquires the stability of a symmetrical system.

In accordance with an other embodiment said at least one leaf spring is C-shaped. The C-shape allows the leaf spring to deflect the most where flexing stresses from the additionally applied load from, for example, a rough road, are the highest. This further improves the riding performance of the vehicle.

The C-shaped leaf spring may have three supporting devices, of which two are positioned one at each end portion of said leaf spring, and a third supporting device, positioned between said end portions of said leaf spring. Hence the suspension system has the advantages of a symmetrical annular leaf spring, and also further increased vertical deflection and resilience that may be desirable.

The suspension system may have two leaf springs, arranged in facing relationship around said wheel hub. Consequently, the suspension system has the advantages of a symmetrical annular leaf spring, and also further increased vertical deflection and resilience.

To improve the mechanical properties of the suspension system and to further reduce its space demand, said at least one leaf spring is a composite spring.

It is advantageous that the essential part of the flex introduced deflection of the middle portion of the at least one leaf spring is directed in the normal direction relative to the axial direction of the leaf spring. The space around the wheel hub will hence be undisturbed, and vital parts, such as wheel axle and brakes, are not influenced.

Furthermore, the bending stiffness of the middle portion of said leaf spring is less than the stiffness of the end portions of said leaf spring. In addition to different configurations of the suspension system such as annular or two C-shaped leaf springs in facing relationship, the stiffness of the middle portion of the leaf spring can be modulated in order to further enhance the vertical deflection and resilience of the suspension system.

In order to provide a compact suspension system, said supporting devices are positioned within the radius of a wheel of the vehicle, as seen from the side of the vehicle.

It is advantageous to design a simple and robust suspension system and hence said supporting devices are operatively connected to the wheel hub and the vehicle body structure by a revolute joint.

The wheel axle location function can be improved by operatively connecting the wheel hub to the at least one leaf spring by lateral links, by means of revolute joints. The lateral links cause the leaf spring to resume the original state.

The wheel axle location function can be further improved by connecting the wheel hub to the vehicle body structure by a control arm.

The control arm can be connected to the wheel hub by a ball joint and to the vehicle body structure by a bushing.

In still a further embodiment the at least one leaf spring of the suspension system has a camber angle of 1° - 20°. The camber angle is taken as the angle between the vertical plane and the plane formed by the extension of the leaf spring. The camber angle is positive when the top of the leaf spring is leaning outwards in relation to the bottom of the leaf spring and in relation to the vehicle, and negative when the top of the leaf spring is leaning inwards and so forth. The camber angle of the suspension system causes a possibility for a compact suspension system and also to improve the riding performance of the vehicle.

It is also disclosed a vehicle having a suspension system comprising at least one leaf spring operatively arranged at a wheel hub of said vehicle, and a vehicle body structure, wherein said at least one leaf spring is provided with a first supporting device, operatively connected to said wheel hub, and a second supporting device, operatively connected to said vehicle body structure, and in that one of said supporting devices is positioned above said wheel hub and the other supporting device is positioned below said wheel hub, in that at least a middle portion of said leaf spring, positioned between said supporting devices, is curved and adapted to flex when said leaf spring is subject to axial loading by loads transferred through said supporting devices, and in that the wheel hub is operatively connected to a wheel axle, and the leaf spring is adapted to be used as a wheel axle positioning system. The advantages of the vehicle having the features of the suspension system corresponds to the advantages gained for the suspension system as such.

### Brief Description of the Drawings

A currently preferred embodiment of the present invention will now be described in more detail, with reference to the accompanying drawings.

Fig. 1a is a side view of a suspension system according to prior art.

Fig. 1b is a cross section of a suspension system according to prior art.

Figs. 2 to 4 are partial schematic side views of three different embodiments of a suspension system according to the invention. Figs. 2a, 3a and 4a disclose the suspension system and the leaf spring is subject to normal conditions. Figs. 2b, 3b and 4b disclose the suspension system and the leaf spring under deflected conditions.

Fig. 5 is a schematic side view of a suspension system having a leaf spring according to a second aspect of the invention.

Fig. 6 a cross section of a suspension system according to an embodiment of the invention.

Fig. 7 is a cross section of a suspension system according to an embodiment of the invention.

### Detailed Description of Preferred Embodiments

Currently preferred embodiments of the invention related to a suspension system will be described in more detail in the following with reference to the accompanying drawings.

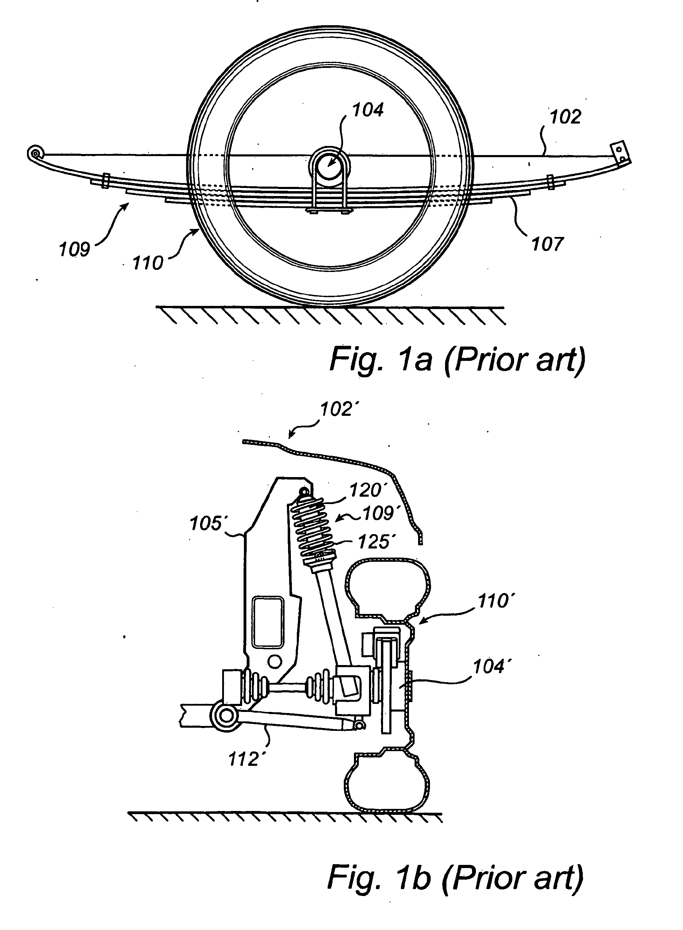

First a brief description of the prior art will be given. Referring now to Fig. 1a, wherein a suspension system 109 according to prior art is disclosed. The suspension system 109 has a leaf spring 107 arranged at a rear wheel 110 of a vehicle. The wheel 110 is connected to a vehicle body 102 through a wheel hub 104 and the leaf spring 107. The leaf spring 107 is reinforced in its middle portion in order to withstand the loads between the wheel 110 and the vehicle body 102. The extension of the leaf spring 107 in the driving direction of the vehicle 102 makes it difficult to use at a steering wheel. Such prior art suspension system also occupies a considerable amount of space.

Referring now to Fig. 1b, wherein a cross section of a front wheel 110' of a vehicle having a second type of suspension system 109' according to prior art is disclosed. The wheel 110' is connected to a wheel hub 104' which in turn is connected to a suspension system 109' and a swinging arm 112'. The suspension system 109' comprises a spiral spring 125' surrounding a shock absorber 120'. The suspension system 109' is connected at its upper part to the vehicle body structure 105'.
As can be seen from Fig. 1b, the space occupied by the suspension system 109' in mainly the vertical direction is considerable.

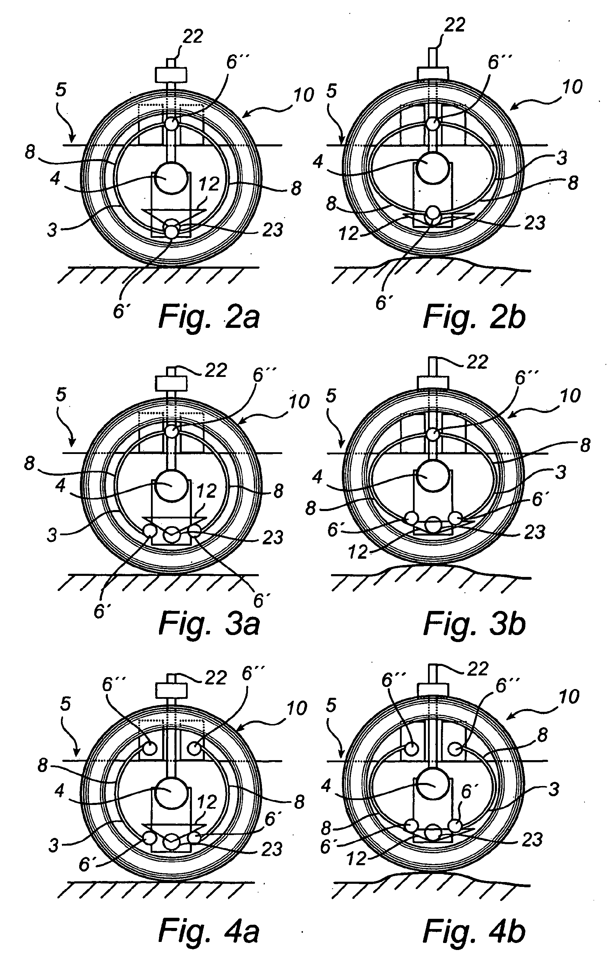

Now, with reference to figs. 2-4 preferred embodiments of the present invention will be described. Figs. 2a, 3a and 4a schematically disclose a wheel 10 in an original state, i.e. when a suspension system 1 according to the present invention is not experiencing additional load from, for example, driving on a rough road. Figs. 2b, 3b and 4b are presenting the same wheel 10 when additionally loaded. Furthermore, figs. 2-4 also disclose three different embodiments of the suspension system 1. In all the three embodiments, the leaf spring 3 is having its supporting devices 6 arranged to a vehicle body structure 5 and to a wheel hub 4 along an essentially vertical direction. By loading the leaf spring 3 in the similar direction as to axial direction of the leaf spring 3, a compact suspension system is accomplished, which material and design can be adapted to many different load conditions and deflection requirements. It is realized that the suspension system 1 can be used at both front and rear wheels 10 of the vehicle. The supporting devices 6 may be positioned above or below the wheel hub respectively. The positions above and below the wheel hub are here and in the following to be interpreted as a position above or a position below an imaginary horizontal plane at a level of the wheel hubs 4 of the vehicle in question.

Figs. 2a and 2b disclose a first preferred embodiment of the suspension system 1. The suspension system 1 comprises one substantially annular leaf spring 3. The leaf spring 3 hence surrounds the wheel hub 4 and acquires the stability of a symmetrical system. The annular leaf spring 3 is operatively connected to the wheel hub 4 and the vehicle body structure 5 by at least one supporting device 6 each. Depending on the design of the wheel 10 these supporting devices 6 may be arranged above or below the wheel hub 4. In this case the below supporting device 6' is arranged to the wheel hub structure and the above supporting device 6" is operatively arranged to the vehicle body structure 5. The connection to the vehicle body structure 5 is preferably accomplished by an interconnection to a guiding device 22.

In Fig. 3a and 3b the suspension system 1 comprises a single bended leaf spring 3, having three supporting devices 6, two below positioned supporting devices 6' at each end portion of the leaf spring and one supporting device 6'' in the middle portion of the leaf spring. Said below positioned supporting devices 6' are connected essentially to the same part of the vehicle 2. In this case the supporting devices 6' are connected to the wheel hub. Consequently, the above positioned supporting device 6'' is connected to the vehicle body structure 5 in a manner previously described. Alternatively, though not shown here, said middle portion supporting device 6'' may be connected to the wheel hub 4 if the other supporting devices are arranged to the vehicle body 5. The suspension system 1 comprising a bended leaf spring 3 according to the second embodiment still having the advantages of a symmetrical system. However, the vertical deflection can be made greater than in the suspension system 1 having an annular leaf spring 3 of similar characteristics, which in some designs may be desirable.

According to a third preferred embodiment which is disclosed in figs. 4a and 4b the suspension system 1 comprises two separate leaf springs 3, each leaf spring 3 having an above and a below positioned supporting device 6. Said two leaf springs 3 are preferably attached in facing relationship around said wheel hub 4. Especially, in a middle portion 8 of the leaf spring 3, between said lower (below) supporting device 6' and said upper (above) supporting device 6'', the design of the leaf spring 3, such as regarding the cross sectional dimensions or the material properties, may advantageously be adapted to give the vehicle good riding performance.

When load is applied to the leaf spring 3 arrangements it causes a vertical deflection, which in turn causes the leaf springs to flex in the normal direction relative to the axial direction of the leaf spring, i.e. away from, or closer to, the wheel hub 4. This behaviour causes a reliable suspension behaviour of the suspension system 1.

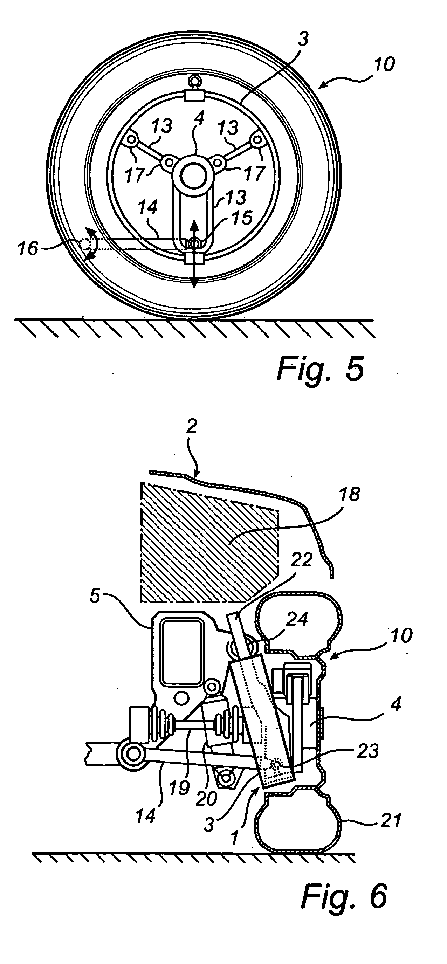

In Fig. 5 a suspension system 1 according to a fourth embodiment is disclosed. The suspension system 1 having in addition to any of the features previously described a wheel axle-positioning or wheel-centering function. To the leaf spring 3, lateral links 13, which are fixed relative to the leaf spring 3 and to the wheel hub 4, are connected through revolute joints 17. When an additional load is applied to the leaf spring 3, the leaf spring 3 is adopting an elongated or compressed form. The end portions of the lateral links that are connected to the leaf spring 3 follows the motion of the leaf spring 3 at all times and guides the wheel hub 4 back to the original state.

Fig. 6 discloses an example of the suspension system 1 arranged in a front wheel drive application. It is realized that any features of the previously described preferred embodiments may be used in various combinations to form a suspension system 1 as disclosed in fig. 6. It is also realized by a person skilled in the art that the leaf spring suspension system 1 may readily be used together with various known suspension systems although not shown here.

The wheel 10 is operatively connected to the vehicle 2 through the wheel hub 4 by a wheel hub carrier 26. As can be seen the wheel hub 4 is operatively connected to the vehicle body structure 5 through a swivel 23 and a control arm 14, and through a leaf spring 3 arrangement and a joint 24. The lower (below) supporting device 6' is operatively connected to the wheel hub 4 and the upper (above) supporting device 6'' is operatively connected to the vehicle body structure 5. A shock absorber 20 is operatively connected to the control arm 14 and to the vehicle body structure 5. The wheel hub 4 is operatively connected to a drive shaft 19, which is essentially unimpeded by the leaf spring 3 due the bended shape of the leaf spring 3.

Furthermore, it can be seen that a void space 18 is made available for possible occupation by other vehicle 2 parts for such an arrangement. The vertical deflection of the uppermost part of the leaf spring 3 is guided by a guiding device 22. The design of the leaf spring 3 is adapted to cause the essential part of the flex introduced vertical deflection of the middle portion 8 to be directed in the normal direction relative to the axial direction of the leaf spring 3.

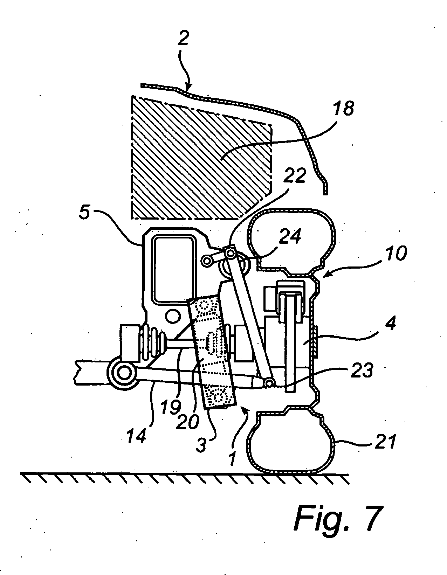

A suspension system 1 with similar features as the previously described front wheel arrangement in fig. 6 is disclosed in fig. 7. However, in the suspension system 1 presented in fig. 7 the leaf spring 3 is arranged in slightly different place revealing the potential flexibility of the inventive suspension system 1. The leaf spring 3 is operatively connected to the control arm 14 and to the vehicle body structure 5. The placement of the leaf spring 3 is a matter of space, influence on other vehicle parts and of the effect or function of the leaf spring 3 itself. Although not shown in the drawings it can be realized by person skilled in the art that there are further positions where the leaf spring 3 can be located.

Although the present invention has been described in connection with particular embodiments thereof, it is to be understood that various modifications, alterations and adaptations may be made by those skilled in the art without departing from the spirit and scope of the invention.

It is, for example, anticipated that the expression operatively connected to the wheel hub 4 will refer to all such hub related elements, such as a wheel hub carrier and other elements interconnected to the wheel hub 4, which elements are common in suspension systems of conventional type.

According to another variant of the suspension system 1, the leaf spring 3 may exhibit other curvatures than the C-shape, such as multi curves, in order to obtain higher bending stresses and hence greater deformation and vertical deflection.

According to yet another variant of the suspension system 1, the essentially annular leaf spring 3 may be elliptic or having other form in addition to a circular leaf spring.

Preferably, the leaf spring 3 is made of composite material to reduce weight, increase load capacity and get the required deflection properties.

It is to be understood that the manifestations of the form in the figures of the leaf spring 3 arrangements according to the present invention are only schematic representations showing the leaf spring 3 arrangements under one load condition of the vehicle 2. Other load conditions may impose other manifestations of the form of the leaf spring 3 arrangement.

Furthermore, although not disclosed in the drawings it is realized that the suspension system 1 according to the invention is not limited to front wheel, or front wheel drive arrangements but can be used for many kinds of wheel suspension systems of a vehicle.

## Claims

1. A suspension system (1) comprising at least one leaf spring (3) adapted to be operatively arranged at a wheel hub (4) of a vehicle (2), and a vehicle body structure (5), wherein said at least one leaf spring (3) is provided with at least two supporting devices (6), wherein a first supporting device (6) is operatively connected to said wheel hub (4), and a second supporting device (6) is operatively connected to said vehicle body structure (5), one of said supporting devices (6") is positioned above said wheel hub (4) and an other of said supporting devices (6') is positioned below said wheel hub (4), and at least a middle portion (8) of said leaf spring, positioned between said supporting devices (6), is curved and adapted to flex when said leaf spring (3) is subject to axial loading by loads transferred through said supporting devices (6), **characterised in that** the wheel hub (4) is operatively connected to a wheel axle, and the leaf spring (3) is used as a wheel axle positioning system.

2. A suspension system (1) according to claim 1, wherein said at least one leaf spring (3) is essentially annular.

3. A suspension system (1) according to claim 1, wherein said at least one leaf spring (3) is C-shaped.

4. A suspension system (1) according to claim 3, wherein said at least one leaf spring (3) is having at least three supporting devices (6), of which two are positioned one at each end portion of said leaf spring (3), and a third supporting device (6) positioned between said end portions of said leaf spring (3).

5. A suspension system (1) according to claim 1, having two leaf springs (3) being arranged in facing relationship around said wheel hub (4) as seen from the side of said vehicle (2).

6. A suspension system (1) according to any one of claims 1-5, wherein said at least one leaf spring (3) is a composite spring.

7. A suspension system (1) according to any one of claims 1-6, wherein the essential part of the flex introduced deflection of the middle portion (8) of the at least one leaf spring (3) is directed in the normal direction relative to the axial direction of said leaf spring (3).

8. A suspension system (1) according to any one of claims 1-7, wherein the bending stiffness of the middle portion (8) of said leaf spring (3) is less than the stiffness of the end portions (9) of said leaf spring (3).

9. A suspension system (1) according to any one of claims 1-8, wherein said supporting devices (6) of said at least one leaf spring (3) are positioned within the radius of a wheel (10) of the vehicle (2), as seen from the side of the vehicle (2).

10. A suspension system (1) according to any one of claims 1-9, wherein said supporting devices (6) are operatively connected to the wheel hub (4) and the vehicle body structure (5) by revolute joints.

11. A suspension system (1) according to any one of claims 1-10, wherein said at least one leaf spring (3) is operatively connected to said wheel hub (4) by a control arm (14).

12. A suspension system (1) according to claim 1, wherein the wheel hub (4) is operatively connected to the at least one leaf spring (3) by lateral links (13) attached by revolute joints (17).

13. A suspension system (1) according to any one of claims 1-12, wherein the wheel hub (4) is operatively connected to the vehicle body structure (5) by a control arm (14).

14. A suspension system (1) according to claim 13, wherein said control arm (14) is connected to the wheel hub (4) by a ball joint (15) and to the vehicle body structure (5) by a bushing (16).

15. A suspension system (1) according to any one of claims 1-14, wherein the at least one leaf spring (3) has a camber angle of -1 - -20°.

16. A vehicle (2) having a suspension system (1) comprising at least one leaf spring (3) operatively arranged at a wheel hub (4) of said vehicle (2), and a vehicle body structure (5), wherein said at least one leaf spring (3) is provided with at least two supporting devices (6),wherein a first supporting device (6') is operatively connected to said wheel hub (4), and a second supporting device (6'') is operatively connected to said vehicle body structure (5), one of said supporting devices (6) is positioned above said wheel hub (4) and an other supporting device (6) is positioned below said wheel hub (4), and at least a middle portion (8) of said leaf spring, positioned between said supporting devices (6), is curved and adapted to flex when said leaf spring (3) is subject to axial loading by loads transferred through said supporting devices (6),
**characterised in that in that** the wheel hub (4) is operatively connected to a wheel axle, and the leaf spring (3) is used as a wheel axle positioning system.

17. A vehicle (2) having a suspension system (1) according to any one of claims 1 to 15.

## Patentansprüche

1. Aufhängungssystem (1), das mindestens eine Blattfeder (3) umfasst, die dafür ausgelegt ist, mit einer Radnabe (4) eines Fahrzeugs (2) und einer Fahrzeugkarosserie (5) wirkverbunden zu werden, wobei die mindestens eine Blattfeder (3) mit mindestens zwei Stützvorrichtungen (6) versehen ist, wobei eine erste Stützvorrichtung (6) mit der Radnabe (4) wirkverbunden ist und eine zweite Stützvorrichtung (6) mit der Fahrzeugkarosserie (5) wirkverbunden ist, wobei eine der Stützvorrichtungen (6") über der Radnabe (4) positioniert ist und eine andere der Stützvorrichtungen (6') unter der Radnabe (4) positioniert ist, und wobei mindestens ein mittlerer Abschnitt (8) der Blattfeder, der zwischen den Stützvorrichtungen (6) positioniert ist, gekrümmt ist und dafür ausgelegt ist, sich durchzubiegen, wenn die Blattfeder (3) durch Lasten, die durch die Stützvorrichtungen (6) übertragen werden, einer axialen Belastung unterworfen wird, **dadurch gekennzeichnet, dass** die Radnabe (4) mit einer Radachse wirkverbunden ist und die Blattfeder (3) als ein Radachsenpositionierungssystem verwendet wird.

2. Aufhängungssystem (1) nach Anspruch 1, wobei die mindestens eine Blattfeder (3) im Wesentlichen ringförmig ist.

3. Aufhängungssystem (1) nach Anspruch 1, wobei die mindestens eine Blattfeder (3) C-förmig ist.

4. Aufhängungssystem (1) nach Anspruch 3, wobei die mindestens eine Blattfeder (3) mindestens drei Stützvorrichtungen (6) aufweist, von denen zwei jeweils an einem Endabschnitt der Blattfeder (3) positioniert sind und eine dritte Stützvorrichtung (6) zwischen den Endabschnitten der Blattfeder (3) positioniert ist.

5. Aufhängungssystem (1) nach Anspruch 1, das zwei Blattfedern (3) aufweist, die - von der Seite des Fahrzeugs (2) aus betrachtet - in einer einander zugewandten Weise um die Radnabe (4) herum angeordnet sind.

6. Aufhängungssystem (1) nach einem der Ansprüche 1-5, wobei die mindestens eine Blattfeder (3) eine Verbundfeder ist.

7. Aufhängungssystem (1) nach einem der Ansprüche 1-6, wobei die Hauptkomponente der durch Biegung hervorgerufenen Auslenkung des mittleren Abschnitts (8) der mindestens einen Blattfeder (3) in der Normalen relativ zu der Axialrichtung der Blattfeder (3) verläuft.

8. Aufhängungssystem (1) nach einem der Ansprüche 1-7, wobei die Biegesteifigkeit des mittleren Abschnitts (8) der Blattfeder (3) geringer ist als die Steifigkeit der Endabschnitte (9) der Blattfeder (3).

9. Aufhängungssystem (1) nach einem der Ansprüche 1-8, wobei die Stützvorrichtungen (6) der mindestens einen Blattfeder (3) - von der Seite des Fahrzeugs (2) aus betrachtet - innerhalb des Radius' eines Rades (10) des Fahrzeugs (2) positioniert sind.

10. Aufhängungssystem (1) nach einem der Ansprüche 1-9, wobei die Stützvorrichtungen (6) durch Drehgelenke mit der Radnabe (4) und der Fahrzeugkarosserie (5) wirkverbunden sind.

11. Aufhängungssystem (1) nach einem der Ansprüche 1-10, wobei die mindestens eine Blattfeder (3) durch einen Querlenker (14) mit der Radnabe (4) wirkverbunden ist.

12. Aufhängungssystem (1) nach Anspruch 1, wobei die Radnabe (4) durch Zuganker (13), die mittels Drehgelenken (17) angebracht sind, mit der mindestens einen Blattfeder (3) wirkverbunden ist.

13. Aufhängungssystem (1) nach einem der Ansprüche 1-12, wobei die Radnabe (4) durch einen Querlenker (14) mit der Fahrzeugkarosserie (5) wirkverbunden ist.

14. Aufhängungssystem (1) nach Anspruch 13, wobei der Querlenker (14) mit der Radnabe (4) durch ein Kugelgelenk (15) und mit der Fahrzeugkarosserie (5) durch eine Buchse (16) verbunden ist.

15. Aufhängungssystem (1) nach einem der Ansprüche 1-14, wobei die mindestens eine Blattfeder (3) einen Querneigungswinkel von -1 bis -20° aufweist.

16. Fahrzeug (2), das ein Aufhängungssystem (1) aufweist, das mindestens eine Blattfeder (3) umfasst, die mit einer Radnabe (4) des Fahrzeugs (2) und einer Fahrzeugkarosserie (5) wirkverbunden ist, wobei die mindestens eine Blattfeder (3) mit mindestens zwei Stützvorrichtungen (6) versehen ist, wobei eine erste Stützvorrichtung (6') mit der Radnabe (4) wirkverbunden ist und eine zweite Stützvorrichtung (6") mit der Fahrzeugkarosserie (5) wirkverbunden ist, wobei eine der Stützvorrichtungen (6) über der Radnabe (4) positioniert ist und eine andere Stützvorrichtung (6) unter der Radnabe (4) positioniert ist, und wobei mindestens ein mittlerer Abschnitt (8) der Blattfeder, der zwischen den Stützvorrichtungen (6) positioniert ist, gekrümmt ist und dafür ausgelegt ist, sich durchzubiegen, wenn die Blattfeder (3) durch Lasten, die durch die Stützvorrichtungen (6) übertragen werden, einer axialen Belastung unterworfen wird,
**dadurch gekennzeichnet, dass** die Radnabe (4) mit einer Radachse wirkverbunden ist und die Blattfeder (3) als ein Radachsenpositionierungssystem verwendet wird.

17. Fahrzeug (2), das ein Aufhängungssystem (1) nach einem der Ansprüche 1 bis 15 aufweist.

## Revendications

1. Système de suspension (1) comprenant au moins un ressort à lames (3) adapté afin d'être agencé opérationnellement au niveau d'un moyeu (4) d'un véhicule (2), et une structure de corps de véhicule (5), dans lequel ledit au moins un ressort à lames (3) est pourvu d'au moins deux dispositifs de support (6), dans lequel un premier dispositif de support (6) est raccordé opérationnellement audit moyeu (4), et un second dispositif de support (6) est raccordé opérationnellement à ladite structure de corps de véhicule (5), un desdits dispositifs de support (6") est positionné au dessus dudit moyeu (4) et un autre desdits dispositifs de support (6') est positionné en dessous dudit moyeu (4), et au moins une portion centrale (8) dudit ressort à lames, positionnée entre lesdits dispositifs de support (6) est incurvée et adaptée afin de fléchir quand ledit ressort à lames (3) est soumis à un chargement axial par des charges transférées à travers lesdits dispositifs de support (6), **caractérisé en ce que** le moyeu (4) est raccordé opérationnellement à un axe de roue, et le ressort à lames (3) est utilisé comme un système de positionnement d'axe de roue.

2. Système de suspension (1) selon la revendication 1, dans lequel ledit au moins un ressort à lames (3) est essentiellement annulaire.

3. Système de suspension (1) selon la revendication 1, dans lequel ledit au moins un ressort à lames (3) est en forme de C.

4. Système de suspension (1) selon la revendication 3, dans lequel ledit au moins un ressort à lames (3) possède au moins trois dispositifs de support (6), desquels deux sont positionnés chacun à une portion d'extrémité dudit ressort à lames (3), et un troisième dispositif de support (6) positionné entre lesdites portions d'extrémité dudit ressort à lames (3).

5. Système de suspension (1) selon la revendication 1, possédant deux ressorts à lames (3) étant agencés de manière à se faire face de part et d'autre dudit moyeu (4) comme on le voit depuis le côté dudit véhicule (2).

6. Système de suspension (1) selon une quelconque des revendications 1 à 5, dans lequel ledit au moins un ressort à lames (3) est un ressort composite.

7. Système de suspension (1) selon une quelconque des revendications 1 à 6, dans lequel la partie essentielle de la déflection induite par la flexion de la portion centrale (8) d'au moins un ressort à lames (3) est dirigée dans la direction normale par rapport à la direction axiale dudit ressort à lames (3).

8. Système de suspension (1) selon une quelconque des revendications 1 à 7, dans lequel la rigidité en flexion de la portion centrale (8) dudit ressort à lames (3) est inférieure à la rigidité des portions d'extrémité (9) dudit ressort à lames (3).

9. Système de suspension (1) selon une quelconque des revendications 1 à 8, dans lequel lesdits dispositifs de support (6) dudit au moins un ressort à lames (3) sont positionnés à l'intérieur du rayon d'une roue (10) du véhicule (2), vu depuis le côté du véhicule (2).

10. Système de suspension (1) selon une quelconque des revendications 1 à 9, dans lequel lesdits dispositifs de support (6) sont raccordés opérationnellement au moyeu (4) et à la structure de corps de véhicule (5) par des articulations rotoïdes.

11. Système de suspension (1) selon une quelconque des revendications 1 à 10, dans lequel chaque au moins un ressort à lames (3) est raccordé opérationnellement audit moyeu (4) par un bras de commande (14).

12. Système de suspension (1) selon la revendication 1, dans lequel le moyeu (4) est raccordé opérationnellement à au moins un ressort à lames (3) par des biellettes latérales (13) fixées par des articulations rotoïdes (17).

13. Système de suspension (1) selon une quelconque des revendications 1 à 12, dans lequel le moyeu (4) est raccordé opérationnellement à la structure de corps de véhicule (5) par un bras de commande (14).

14. Système de suspension (1) selon la revendication 13, dans lequel ledit bras de commande (14) est raccordé au moyeu (4) par une articulation sphérique (15) et à la structure de corps de véhicule (5) par un coussinet (16).

15. Système de suspension (1) selon une quelconque des revendications 1 à 14, dans lequel le au moins un ressort à lames (3) possède un angle de cambrure de -1 à -20°.

16. Véhicule (2) possédant un système de suspension (1) comprenant au moins un ressort à lames (3) agencé opérationnellement au niveau d'un moyeu (4) dudit véhicule (2), et une structure de corps de véhicule (5), dans lequel ledit au moins un ressort à lames (3) est pourvu d'au moins deux dispositifs de support (6), dans lequel un premier dispositif de support (6') est raccordé opérationnellement audit moyeu (4), et un second dispositif de support (6") est raccordé opérationnellement à ladite structure de corps de véhicule (5), un desdits dispositifs de support (6) est positionné au dessus dudit moyeu (4) et un autre dispositif de support (6) est positionné en dessous dudit moyeu (4), et au moins une portion centrale (8) dudit ressort à lames positionnée entre lesdits dispositifs de support (6) est incurvée et adaptée afin de fléchir quand ledit ressort à lames (3) est soumis à un chargement axial par des charges transférées à travers lesdits dispositifs de support (6),
**caractérisé en ce que** le moyeu (4) est raccordé opérationnellement à un axe de roue, et le ressort à lames (3) est utilisé comme un système de positionnement d'axe de roue.

17. Véhicule (2) possédant un système de suspension (1) selon une quelconque des revendications 1 à 15.
